# EUROPÄISCHE PATENTANMELDUNG

(11) **EP 4 411 119 A1**
(43) Veröffentlichungstag der Anmeldung: **07.08.2024**
(21) Anmeldenummer: 24154997.1
(22) Anmeldetag: 31.01.2024
(51) Int. Cl.: F01N 3/20, B60H 1/22, F01N 13/00, F01N 3/025, F01N 3/027, F01N 3/035, F01N 3/08, F01N 3/10

(54) **ABGASNACHBEHANDLUNGSSYSTEM SOWIE VERFAHREN ZUR ABGASNACHBEHANDLUNG EINES VERBRENNUNGSMOTORS**

(30) Priorität: 02.02.2023 DE 102023102561
(71) Anmelder: VOLKSWAGEN AG, 38440 Wolfsburg (DE)
(72) Erfinder: BUNKUS, Johannes, 39393 Barneberg (DE); BLEI, Ingo, 38110 Braunschweig (DE)
(74) Vertreter: Gulde & Partner

(57) **Zusammenfassung**

Die Erfindung betrifft ein Abgasnachbehandlungssystem für einen Verbrennungsmotor (10). Das Abgasnachbehandlungssystem umfasst eine Abgasanlage (20) und eine Standheizung (30) mit einer Brennkammer (32), welche über eine Verbindungsleitung (58) mit einer Einleitstelle (28) an einem Abgaskanal (26) der Abgasanlage (20) verbunden ist. Stromabwärts der Einleitstelle (28) sind mindestens eine erste Abgasnachbehandlungskomponente (40) und eine zweite Abgasnachbehandlungskomponente (42) angeordnet. Es ist vorgesehen, dass zumindest eine der Abgasnachbehandlungskomponenten (40, 42) ein elektrisches Heizelement (46) zum Aufheizen der Abgasnachbehandlungskomponente (40, 42) umfasst oder dass zumindest einer der Abgasnachbehandlungskomponenten (40, 42) ein elektrisches Heizelement (46) vorgeschaltet ist. Dabei ist das elektrische Heizelement (46) stromabwärts der Einleitstelle (28) angeordnet.

Die Erfindung betrifft ferner ein Verfahren zur Abgasnachbehandlung eines Verbrennungsmotors (10) mit einem solchen Abgasnachbehandlungssystem.

## Beschreibung

Die Erfindung betrifft ein Abgasnachbehandlungssystem für einen Verbrennungsmotor sowie ein Verfahren zur Abgasnachbehandlung eines Verbrennungsmotors mit einem solchen Abgasnachbehandlungssystem gemäß dem Oberbegriff der unabhängigen Patentansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen StickoxidEmissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Als Reduktionsmittel wird dabei bevorzugt Ammoniak verwendet. Weil der Umgang mit reinem Ammoniak aufwendig ist, wird bei Fahrzeugen üblicherweise eine synthetische, wässrige Harnstofflösung verwendet, die in einer dem SCR-Katalysator vorgeschalteten Mischeinrichtung mit dem heißen Abgasstrom vermischt wird. Durch diese Vermischung wird die wässrige Harnstofflösung erhitzt, wobei die wässrige Harnstofflösung Ammoniak im Abgaskanal freisetzt. Eine handelsübliche, wässrige Harnstofflösung setzt sich im Allgemeinen aus 32,5 % Harnstoff und 67,5 % Wasser zusammen.

Zudem ist bekannt, die Rohemissionen eines Verbrennungsmotors zu verringern, indem ein Teil des Abgasstroms in den Ansaugtrakt zurückgeführt und der Frischluft beigemischt wird. Dabei lässt sich bei aufgeladenen Verbrennungsmotoren zwischen einer Hochdruck-Abgasrückführung und einer Niederdruck-Abgasrückführung unterscheiden. Die Hochdruck-Abgasrückführung verbindet den Auslassbereich des Verbrennungsmotors mit dem Einlassbereich des Verbrennungsmotors. Die Niederdruck-Abgasrückführung verbindet einen Bereich in der Abgasanlage stromabwärts einer Turbine des Abgasturboladers mit einem Bereich des Ansaugtraktes stromaufwärts eines Verdichters des Abgasturboladers. Eine Freigabe der Niederdruck-Abgasrückführung kann bei aufgeladenen Diesel- und Ottomotoren erst dann erfolgen, wenn das Risiko der Kondensatbildung stromaufwärts des Verdichters des Abgasturboladers nicht mehr gegeben ist, da die Kondensattröpfchen den Verdichter beschädigen können. Üblicherweise erfolgt die Freigabe der Niederdruck-Abgasrückführung in Abhängigkeit von einer Kühlmitteltemperatur des Verbrennungsmotors, wobei ein Schwellenwert der Kühlmitteltemperatur in Abhängigkeit von der Temperatur der Ansaugluft gewählt wird und mit sinkender Ansauglufttemperatur zunimmt. Somit kann nach einem Start des Verbrennungsmotors ein Zeitraum vergehen, bevor die Niederdruck-Abgasrückführung freigegeben werden kann.

Mit der Niederdruck-Abgasrückführung kann gegenüber der Hochdruck-Abgasrückführung eine signifikante Minderung der Stickoxid-Rohemissionen erreicht werden. Darüber hinaus kann in weiten Bereichen des Motorkennfelds des Verbrennungsmotors eine höhere Abgasrückführungsrate eingestellt werden, weil für die Niederdruck-Abgasrückführung ein entsprechendes Spülgefälle zwischen dem Abgaskanal und dem Ansaugtrakt nicht erforderlich bzw. stets gegeben ist.

Die Kaltstartemissionen und der anschließende Warmlauf des Verbrennungsmotors macht einen wesentlichen Anteil der Gesamtemissionen aus. Dabei ist insbesondere die Phase vor dem Erreichen der jeweiligen Light-Off-Temperatur der Abgasnachbehandlungskomponente kritisch, da in dieser Phase die Schadstoffe im Wesentlichen unkonvertiert in die Umwelt emittiert werden. Zur Verringerung der Stickoxidemissionen sind sogenannte passive NOx-Adsorber bekannt, welche die Stickoxide schon bei vergleichsweise niedrigen Temperaturen einspeichern und bei höheren Abgastemperaturen wieder freisetzen. Passive NOx-Adsorber können jedoch durch ein unterstöchiometrisches Abgas dauerhaft geschädigt werden und ihre Wirksamkeit verlieren.

Allgemein bekannt sind der Einsatz und das Vorhandensein von Standheizungen in Fahrzeugen, wobei solche Standheizungen primär dafür verwendet werden, um die Fahrgastzelle an sich aufzuheizen, beziehungsweise generell zu temperieren. Üblicherweise sind diese Heizsysteme dabei nicht auf einen laufenden Motor des Fahrzeugs angewiesen und werden beispielsweise mittels Kraftstoff aus dem Fahrzeugtank versorgt und betrieben. Neben dem direkten Aufheizen der Innenraumluft des Fahrzeugs kann die erzeugte Wärme auch über den Kühlwasserkreislauf des Fahrzeugs in einen Heizkreislauf gekoppelt werden.

Aus der DE 10 2018 127 624 A1 sind ein Verfahren sowie eine Vorrichtung zum Betreiben einer Standheizungsvorrichtung eines Kraftfahrzeugs bekannt. Gemäß dem vorgeschlagenen Verfahren wird die Standheizungsvorrichtung mit einem Kraftstoff betrieben, ein Abgas der Standheizungsvorrichtung stromauf einer in der Abgasanlage angeordneten Turbine eines Abgasturboladers in die Abgasanlage des Kraftfahrzeugs eingeleitet. Dabei wird das Abgas der Standheizungsvorrichtung in die Abgasanlage eingeleitet.

Aus der DE 10 2012 002 329 A1 ist ein Verfahren zum Betreiben eines Hybridfahrzeuges mit einem Verbrennungsmotor und einem elektrischen Antriebsmotor bekannt. Dabei wird ein durch das Abgasnachbehandlungssystem des Verbrennungsmotors geförderter Luftstrom bei einem Stillstand des Verbrennungsmotors aufgeheizt. Der Luftstrom wird durch eine Luftpumpe erzeugt und durch ein Heizmodul aufgeheizt. Dabei wird der aufgeheizte Luststrom bereits vor einem Start des Verbrennungsmotors in die Abgasanlage eingeleitet, um die Abgasnachbehandlungskomponenten aufzuheizen und somit für einen bevorstehenden Start des Verbrennungsmotors vorzukonditionieren, um ab dem Start des Verbrennungsmotors eine effiziente Konvertierung der Schadstoffe zu ermöglichen.

Die US 2013 / 0 140 295 A1 offenbart eine Vorrichtung und ein Verfahren, um eine Kondensierung von Wasserdampf in einem elektrisch beheizbaren Katalysator in einer Abgasanlage eines Verbrennungsmotors zu verhindern.

Der Erfindung liegt nun die Aufgabe zugrunde, bei einem Kraftfahrzeug mit einer Standheizung die Emissionen weiter zu reduzieren und eine besonders effiziente Konvertierung der Schadstoffe insbesondere in einer Kaltstartphase des Verbrennungsmotors zu ermöglichen.

Die Aufgabe wird durch ein Abgasnachbehandlungssystem für einen Verbrennungsmotor gelöst, welcher eine Abgasanlage und eine Standheizung mit einer Brennkammer umfasst, welche über eine Verbindungsleitung mit einer Einleitstelle an einem Abgaskanal der Abgasanlage verbunden ist. Dabei sind stromabwärts der Einleitstelle mindestens eine erste Abgasnachbehandlungskomponente, insbesondere ein Oxidationskatalysator, ein NOx-Speicherkatalysator oder ein NOx-Adsorber und eine zweite Abgasnachbehandlungskomponente, insbesondere ein Partikelfilter, ein SCR-Katalysator oder ein Partikelfilter mit einer Beschichtung zur selektiven katalytischen Reduktion von Stickoxiden angeordnet. Erfindungsgemäß ist vorgesehen, dass zumindest eine der Abgasnachbehandlungskomponenten ein elektrisches Heizelement zum Aufheizen der Abgasnachbehandlungskomponente umfasst oder dass zumindest einer der Abgasnachbehandlungskomponenten ein elektrisches Heizelement vorgeschaltet ist, wobei das elektrische Heizelement stromabwärts der Einleitstelle angeordnet ist.

Das erfindungsgemäße Abgasnachbehandlungssystem ermöglich bei einem Kraftfahrzeug mit Standheizung eine besonders effiziente Konvertierung der Abgasemissionen. Durch das parallele Aufheizen der Abgasnachbehandlungskomponenten durch das heiße Abgas der Standheizung und den Wärmeeintrag durch das elektrische Heizelement ist ein besonders schnelles und effizientes Aufheizen der Abgasnachbehandlungskomponenten möglich. Dadurch können die Abgasnachbehandlungskomponenten bereits unmittelbar nach dem Start des Verbrennungsmotors eine effiziente Konvertierung der Schadstoffe ermöglichen. Zusätzlich können die Emissionen des Abgasbrenners durch die durch das elektrische Heizelement aufgeheizten Abgasnachbehandlungskomponenten konvertiert werden, sodass auch die Abgase der Standheizung entsprechend konvertiert werden können und nicht ohne zusätzliche Abgasnachbehandlung in die Umwelt emittiert werden.

Durch die in den abhängigen Ansprüchen aufgeführten zusätzlichen Merkmale sind vorteilhafte Weiterentwicklungen und Verbesserungen des im unabhängigen Anspruch beschriebenen Abgasnachbehandlungssystem für einen Verbrennungsmotor möglich.

In bevorzugter Ausgestaltung der Erfindung ist vorgesehen, dass in der Abgasanlage eine Turbine eines Abgasturboladers angeordnet ist, wobei die Einleitstelle stromabwärts der Turbine des Abgasturboladers und stromaufwärts der ersten Abgasnachbehandlungskomponente angeordnet ist. Durch ein Einleiten des heißen Abgases der Brennkammer der Standheizung unmittelbar vor der in Strömungsrichtung ersten Abgasnachbehandlungskomponente muss nur ein minimaler Abschnitt des Abgaskanals aufgeheizt werden, wodurch besonders geringe Wärmeverluste entstehen. Dies ermöglicht ein besonders schnelles Aufheizen der Abgasnachbehandlungskomponenten.

Alternativ ist mit Vorteil vorgesehen, dass in der Abgasanlage eine Turbine eines Abgasturboladers angeordnet ist, wobei die Einleitstelle stromabwärts eines Auslasses des Verbrennungsmotors und stromaufwärts der Turbine des Abgasturboladers angeordnet ist. Ein Einleiten stromaufwärts der Turbine des Abgasturboladers hat den Vorteil, dass der Abgasturbolader aufgeheizt wird und die Wärmeverluste nach dem Start des Verbrennungsmotors verringert werden können. Ferner kann das Einleiten der Abgase der Standheizung dazu genutzt werden, um den durch die Turbine des Abgasturboladers geführten Abgasmassenstrom zu erhöhen und somit das Ansprechverhalten des Abgasturboladers zu verbessern. Dabei kann die Abgasenthalpie der Standheizung genutzt werden, um Ladedruck aufzubauen und die Leistung des Verbrennungsmotors zu erhöhen.

In einer vorteilhaften Ausgestaltung ist dabei vorgesehen, dass die Einleitstelle in einem Abgaskrümmer des Verbrennungsmotors ausgebildet ist. Ein Einleiten der heißen Abgase der Standheizung hat den Vorteil, dass die komplette Abgasanlage durch die Standheizung vorgewärmt werden kann und nach dem Start des Verbrennungsmotors die Temperatur der Abgasanlage auch bei einem Niedriglastbetrieb betriebssicher über einem Schwellenwert gehalten werden kann. Dies ermöglich beispielsweise eine frühzeitige Freigabe einer Abgasrückführung, da die Gefahr einer Kondensatbildung in der Abgasrückführung minimiert werden kann.

Gemäß einer vorteilhaften Ausgestaltung des Abgasnachbehandlungssystems ist vorgesehen, dass die erste Abgasnachbehandlungskomponente ein Oxidationskatalysator, ein NOx-Speicherkatalysator oder ein NOx-Adsorber und die zweite Abgasnachbehandlungskomponente ein Partikelfilter, insbesondere ein Partikelfilter mit einer Beschichtung zur selektiven katalytischen Reduktion von Stickoxiden, oder ein Katalysator zur selektiven katalytischen Reduktion von Stickoxiden, jeweils mit stromaufwärts angeordneter Dosier- und Mischstrecke ist. Dadurch ist bei einem Dieselmotor eine besonders effiziente Abgasnachbehandlung und insbesondere eine Reduzierung der Kaltstartemissionen möglich.

In weiterer bevorzugter Ausgestaltung der Erfindung ist vorgesehen, dass in der Abgasanlage stromabwärts der zweiten Abgasnachbehandlungskomponente eine dritte Abgasnachbehandlungskomponente, insbesondere eine weitere Abgasnachbehandlungskomponente zur selektiven katalytischen Reduktion von Stickoxiden, angeordnet ist. Dadurch kann die Effizienz der Abgasnachbehandlung weiter verbessert werden.

In einer vorteilhaften Ausgestaltung des Abgasnachbehandlungssystems ist vorgesehen, dass in der Verbindungsleitung stromabwärts eines Auslasses der Brennkammer der Standheizung und stromaufwärts der Einleitstelle ein Steuerelement zur Steuerung des in die Abgasanlage eingebrachten Abgasstroms der Brennkammer angeordnet ist. Durch das Steuerelement kann der Abgasstrom des Abgasbrenners gesteuert werden. Ferner kann durch das Steuerelement verhindert werden, dass Abgas unkontrolliert über die Standheizung aus dem Abgaskanal ausströmt und somit ohne Abgasnachbehandlung das Abgassystem verlässt.

Ein weiterer Teilaspekt der Erfindung betrifft ein Verfahren zur Abgasnachbehandlung eines Verbrennungsmotor mit einem solchen Abgasnachbehandlungssystem. Das Verfahren umfasst folgende Arbeitsschritte:
- Aktivieren der Standheizung, wobei ein Kraftstoff-Luft-Gemisch in einer Brennkammer der Standheizung verbrannt wird,
- Einleiten der Abgase des in der Brennkammer verbrannten Kraftstoff-Luft-Gemischs in die Abgasanlage des Verbrennungsmotors,
- Aktivieren des elektrischen Heizelements,
- Aufheizen zumindest einer Abgasnachbehandlungskomponente durch das elektrische Heizelement und das Abgas der Standheizung,
- Start des Verbrennungsmotors,
- Reduzieren der Heizleistung, insbesondere Abschalten des elektrischen Heizelements, wenn die Abgasnachbehandlungskomponente ihre Light-Off-Temperatur erreicht oder überschritten hat.

Das erfindungsgemäße Verfahren ermöglich bei einem Kraftfahrzeug mit Standheizung eine besonders effiziente Konvertierung der Abgasemissionen, da die Abgasnachbehandlungskomponenten bereits unmittelbar nach dem Start des Verbrennungsmotors eine effiziente Konvertierung der Schadstoffe ermöglichen. Zusätzlich können die Emissionen des Abgasbrenners durch die durch das elektrische Heizelement aufgeheizten Abgasnachbehandlungskomponenten konvertiert werden, sodass auch die Abgase der Standheizung entsprechend konvertiert werden können und nicht ohne zusätzliche Abgasnachbehandlung in die Umwelt emittiert werden.

In einer vorteilhaften Ausgestaltung des Verfahrens ist vorgesehen, dass der Abgasstrom der Standheizung einen Gasstrom in der Abgasanlage ausbildet, um Wärme konvektiv von dem elektrischen Heizelement abzutransportieren und somit eine thermische Schädigung des elektrischen Heizelements zu verhindern. Dadurch kann das elektrische Heizelement auch bei Stillstand des Verbrennungsmotors mit einer entsprechend hohen Heizleistung betrieben werden, ohne eine dauerhafte Schädigung, insbesondere ein Durchbrennen eines Heizwiderstandes des elektrischen Heizelements, zu riskieren. Durch den hohen Energieeintrag durch den parallelen Eintrag des Abgases der Standheizung und des elektrischen Heizelements können die Abgasnachbehandlungskomponenten besonders schnell und effizient auf ihre jeweilige Light-Off-Temperatur aufgeheizt werden.

In einer vorteilhaften Ausgestaltung des Verfahrens ist vorgesehen, dass der Verbrennungsmotor erst dann gestartet wird, wenn zumindest eine Abgasnachbehandlungskomponente ihre Light-Off-Temperatur erreicht hat. Vorzugsweise wird der Verbrennungsmotor erst dann gestartet, wenn sämtliche Abgasnachbehandlungskomponenten ihre jeweilige Light-Off-Temperatur zur Konvertierung von limitierten Abgaskomponenten erreicht haben. Dadurch ist insbesondere bei einem Kaltstart eines Verbrennungsmotors eine besonders effiziente Abgasnachbehandlung möglich, wodurch die Emissionen des Verbrennungsmotors minimiert werden können.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Verbrennungsmotors mit einem bevorzugten Ausführungsbeispiel eines erfindungsgemäßen Abgasnachbehandlungssystem,
- Figur 2: eine schematische Darstellung eines Verbrennungsmotors mit einem weiteren bevorzugten Ausführungsbeispiel eines erfindungsgemäßen Abgasnachbehandlungssystem,
- Figur 3: eine schematische Darstellung eines Verbrennungsmotors mit einem weiteren bevorzugten Ausführungsbeispiel eines erfindungsgemäßen Abgasnachbehandlungssystem, und
- Figur 4: ein Ablaufdiagramm zur Durchführung eines erfindungsgemäßen Verfahrens zur Abgasnachbehandlung eines Verbrennungsmotors.

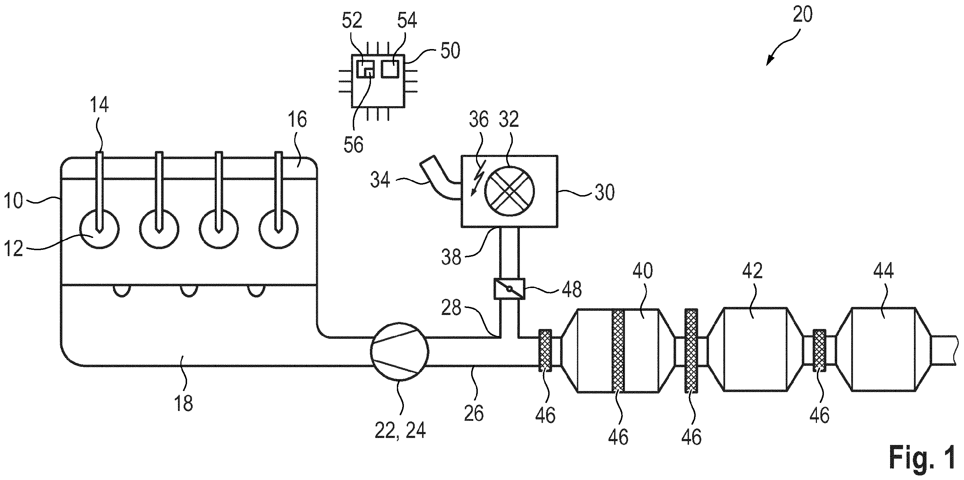

Figur 1 zeigt die schematische Darstellung eines Verbrennungsmotors 10 mit einer erfindungsgemäßen Abgasanlage 20. Der Verbrennungsmotor 10 ist als direkteinspritzender Dieselmotor ausgeführt. Der Verbrennungsmotor 10 weist mehrere Brennräume 12 auf. An den Brennräumen 12 ist jeweils ein Kraftstoffinjektor 14 zur Einspritzung eines Kraftstoffes in den jeweiligen Brennraum 12 angeordnet. Der Verbrennungsmotor 10 ist mit seinem Einlass 16 mit einem nicht dargestellten Luftversorgungssystem und mit seinem Auslass 18 mit einer Abgasanlage 20 verbunden. An den Brennräumen 12 sind Einlassventile und Auslassventile angeordnet, mit welchen eine fluidische Verbindung vom Luftversorgungssystem zu den Brennräumen 12 oder von den Brennräumen 12 zur Abgasanlage 20 geöffnet oder verschlossen werden kann.

Die Abgasanlage 20 umfasst einen Abgaskanal 26, in welchem in Strömungsrichtung eines Abgasstroms des Verbrennungsmotors 10 durch die Abgasanlage 20 eine Turbine 24 eines Abgasturboladers 22, stromabwärts der Turbine 24 des Abgasturboladers 22 ein erste Abgasnachbehandlungskomponente 40, insbesondere ein Oxidationskatalysator 40, stromabwärts der ersten Abgasnachbehandlungskomponente 40 eine zweite Abgasnachbehandlungskomponente 42, insbesondere eine Partikelfilter 42 mit einer katalytischen Beschichtung zur selektiven katalytischen Reduktion von Stickoxiden, und stromabwärts der zweiten Abgasnachbehandlungskomponente 42 eine dritte Abgasnachbehandlungskomponente 44, insbesondere ein SCR-Katalysator 44, angeordnet ist. Das Abgasnachbehandlungssystem umfasst ferner eine Standheizung 30.

Die Standheizung 30 umfasst eine Brennkammer 32, an welcher eine Zündeinrichtung 36 zur Entzündung eines Kraftstoff-Luft-Gemischs in der Brennkammer 32 angeordnet ist. Die Standheizung 30 umfasst ferner eine Luftversorgung 34, mit welcher der Brennkammer 32 Frischluft zugeführt werden kann. Die Standheizung 30 umfasst ferner einen Auslass 38, über welchen das in der Brennkammer 32 verbrannte Kraftstoff-Luft-Gemisch dem Abgaskanal 26 zugeführt werden kann. Dazu ist eine Verbindungsleitung 58 vorgesehen, welche die Brennkammer 32 der Standheizung 30 mit dem Abgaskanal 26 verbindet und an einer Einleitstelle 28 stromabwärts der Turbine 24 des Abgasturboladers 22 und stromaufwärts der ersten Abgasnachbehandlungskomponente 40 in den Abgaskanal 26 der Abgasanlage 20 einmündet. In der Verbindungsleitung 58 ist ein Steuerelement 48, insbesondere ein Ventil oder eine Klappe, angeordnet, über welches eine Zufuhr des in der Brennkammer 32 verbrannten Kraftstoff-Luft-Gemischs in den Abgaskanal 26 gesteuert, und im Betrieb des Verbrennungsmotors 10 ein Austreten des Abgases in Richtung Standheizung verhindert werden kann. Alternativ zu einem Oxidationskatalysator 40 kann die erste Abgasnachbehandlungskomponente 40 auch als ein NOx-Speicherkatalysator oder ein NOx-Adsorber ausgebildet sein. Ferner kann die zweite Abgasnachbehandlungskomponente 42 anstelle eines Partikelfilters mit einer Beschichtung zur selektiven katalytischen Reduktion von Stickoxiden auch als ein unbeschichteter oder mit einer Oxidationsbeschichtung versehener Partikelfilter ausgebildet sein. Die dritte Abgasnachbehandlungskomponente 44 kann bei einer vereinfachten Ausführung eines erfindungsgemäßen Abgasnachbehandlungssystems entfallen, wenn die zweite Abgasnachbehandlungskomponente 42 als Partikelfilter mit einer Beschichtung zur selektiven katalytischen Reduktion von Stickoxiden ausgeführt ist.

Die Abgasanlage 20 umfasst ferner mindestens ein elektrisches Heizelement 46, mit welchem ein Abgasstrom des Verbrennungsmotors 10, ein Abgasstrom der Standheizung 30 und/oder eine Abgasnachbehandlungskomponente 40, 42, 44 elektrisch beheizt werden kann. In Figur 1 sind mehrere potenziell mögliche Positionen für ein solches elektrisches Heizelement 46 dargestellt. In einer ersten Ausführung ist das elektrische Heizelement 46 stromabwärts der Einleitstelle 28 für das Abgas der Standheizung 30 und stromaufwärts der ersten Abgasnachbehandlungskomponente 40, vorzugsweise stromaufwärts des Oxidationskatalysators 40 angeordnet. Alternativ oder zusätzlich kann das elektrische Heizelement 46 in die erste Abgasnachbehandlungskomponente 40, insbesondere in den Oxidationskatalysator 40 integriert sein. Alternativ oder zusätzlich kann das elektrische Heizelement 46 stromabwärts der ersten Abgasnachbehandlungskomponente 40 und stromaufwärts der zweiten Abgasnachbehandlungskomponente 42, insbesondere stromabwärts des Oxidationskatalysators 40 und stromaufwärts des Partikelfilters 42 mit der Beschichtung zu selektiven katalytischen Reduktion von Stickoxiden, angeordnet sein. Ferner kann das elektrische Heizelement 46 in den Partikelfilter 42 integriert sein und insbesondere ein elektrisches Erhitzen der Filterstruktur des Partikelfilters ermöglichen. Alternativ oder zusätzlich kann das elektrische Heizelement 46 stromabwärts der zweiten Abgasnachbehandlungskomponente 42 und stromaufwärts der dritten Abgasnachbehandlungskomponente 44 angeordnet sein.

Der Verbrennungsmotor 10 steht mit einem Steuergerät 50 in Wirkverbindung, welches unter anderem die in die Brennräume 12 des Verbrennungsmotors 10 eingebrachte Kraftstoffmenge sowie den Einspritzzeitpunkt steuert. Das Steuergerät 50 steht ferner mit der Standheizung 30, dem Steuerelement 48 sowie zumindest einem elektrischen Heizelement 46 in der Abgasanlage 20 in Wirkverbindung. Das Steuergerät 50 umfasst eine Speichereinheit 52 und eine Recheneinheit 54. In der Speichereinheit 52 ist ein maschinenlesbarer Computerprogrammcode 56 abgelegt, welcher ein erfindungsgemäßes Verfahren zur Abgasnachbehandlung des Verbrennungsmotors 10 steuert, wenn der Computerprogrammcode 56 durch die Recheneinheit 54 des Steuergeräts 50 ausgeführt wird.

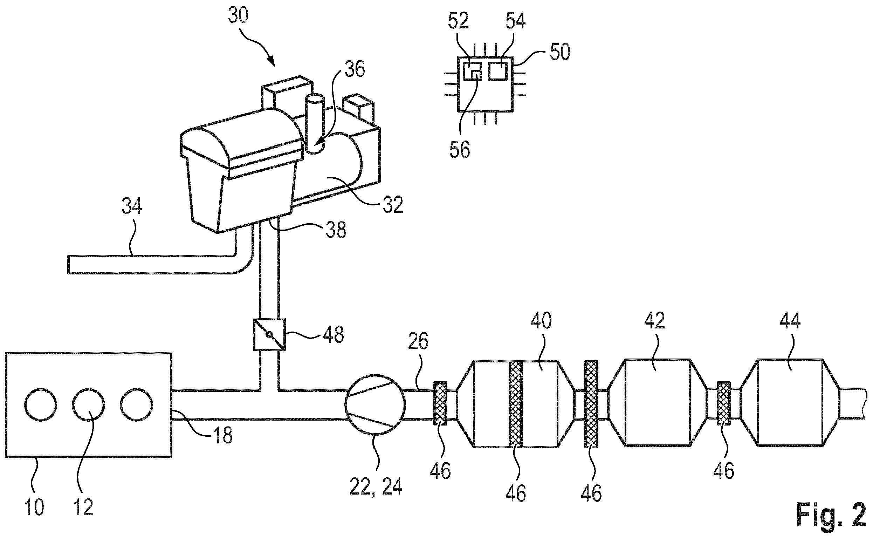

In Figur 2 ist ein weiteres Ausführungsbeispiel eines Verbrennungsmotors 10 mit einem erfindungsgemäßen Abgasnachbehandlungssystem dargestellt. Der Verbrennungsmotor 10 ist als direkteinspritzender Dieselmotor ausgeführt und weist mehrere Brennräume 12 auf. An den Brennräumen 12 ist jeweils ein Kraftstoffinjektor 14 zur Einspritzung eines Kraftstoffes in den jeweiligen Brennraum 12 angeordnet. Der Verbrennungsmotor 10 ist mit seinem Einlass 16 mit einem nicht dargestellten Luftversorgungssystem und mit seinem Auslass 18 mit einer Abgasanlage 20 verbunden. An den Brennräumen 12 sind Einlassventile und Auslassventile angeordnet, mit welchen eine fluidische Verbindung vom Luftversorgungssystem zu den Brennräumen 12 oder von den Brennräumen 12 zur Abgasanlage 20 geöffnet oder verschlossen werden kann.

Die Abgasanlage 20 umfasst einen Abgaskanal 26, in welchem in Strömungsrichtung eines Abgasstromes des Verbrennungsmotors 10 durch die Abgasanlage 20 eine Turbine 24 eines Abgasturboladers 22, stromabwärts der Turbine 24 des Abgasturboladers 22 eine erste Abgasnachbehandlungskomponente 40, insbesondere ein Oxidationskatalysator 40, stromabwärts der ersten Abgasnachbehandlungskomponente 40 eine zweite Abgasnachbehandlungskomponente 42, insbesondere eine Partikelfilter 42 mit einer katalytischen Beschichtung zur selektiven katalytischen Reduktion von Stickoxiden, und stromabwärts der zweiten Abgasnachbehandlungskomponente 42 eine dritte Abgasnachbehandlungskomponente 44, insbesondere ein SCR-Katalysator 44, angeordnet ist. Das Abgasnachbehandlungssystem umfasst ferner eine Standheizung 30. Die Standheizung 30 umfasst eine Brennkammer 32, an welcher eine Zündeinrichtung 36 zur Entzündung eines Kraftstoff-Luft-Gemischs in der Brennkammer 32 angeordnet ist. Die Standheizung 30 umfasst ferner eine Luftversorgung 34, mit welcher der Brennkammer 32 Frischluft zugeführt werden kann. Die Standheizung 30 umfasst ferner einen Auslass 38, über welchen das in der Brennkammer 32 verbrannte Kraftstoff-Luft-Gemisch dem Abgaskanal 26 zugeführt werden kann. Dazu ist eine Verbindungsleitung 58 vorgesehen, welche die Brennkammer 32 der Standheizung 30 mit dem Abgaskanal 26 verbindet und an einer Einleitstelle 28 stromabwärts des Auslasses 18 des Verbrennungsmotors 10 und stromaufwärts der Turbine 24 des Abgasturboladers 22 in den Abgaskanal 26 der Abgasanlage 20 einmündet. In der Verbindungsleitung 58 ist ein Steuerelement 48, insbesondere ein Ventil oder eine Klappe, angeordnet, über welches eine Zufuhr des in der Brennkammer 32 verbrannten Kraftstoff-Luft-Gemischs in den Abgaskanal 26 gesteuert, und im Betrieb des Verbrennungsmotors 10 ein Austreten des Abgases in Richtung Standheizung verhindert werden kann.

Die Abgasanlage 20 umfasst ferner mindestens ein elektrisches Heizelement 46, mit welchem ein Abgasstrom des Verbrennungsmotors 10, ein Abgasstrom der Standheizung 30 und/oder eine Abgasnachbehandlungskomponente 40, 42, 44 elektrisch beheizt werden kann. In Figur 2 sind mehrere potenziell mögliche Positionen für ein solches elektrisches Heizelement 46 dargestellt. In einer ersten Ausführung ist das elektrische Heizelement 46 stromabwärts der Einleitstelle 28 für das Abgas der Standheizung 30 und stromaufwärts der ersten Abgasnachbehandlungskomponente 40, vorzugsweise stromaufwärts des Oxidationskatalysators 40 angeordnet. Alternativ oder zusätzlich kann das elektrische Heizelement 46 in die erste Abgasnachbehandlungskomponente 40, insbesondere in den Oxidationskatalysator 40 integriert sein. Alternativ oder zusätzlich kann des elektrische Heizelement 46 stromabwärts der ersten Abgasnachbehandlungskomponente 40 und stromaufwärts der zweiten Abgasnachbehandlungskomponente 42, insbesondere stromabwärts des Oxidationskatalysators 40 und stromaufwärts des Partikelfilters 42 mit der Beschichtung zu selektiven katalytischen Reduktion von Stickoxiden, angeordnet sein. Ferner kann das elektrische Heizelement 46 in den Partikelfilter 42 integriert sein und insbesondere ein elektrisches Erhitzen der Filterstruktur des Partikelfilters 42 ermöglichen. Alternativ oder zusätzlich kann das elektrische Heizelement 46 stromabwärts der zweiten Abgasnachbehandlungskomponente 42 und stromaufwärts der dritten Abgasnachbehandlungskomponente 44 angeordnet sein.

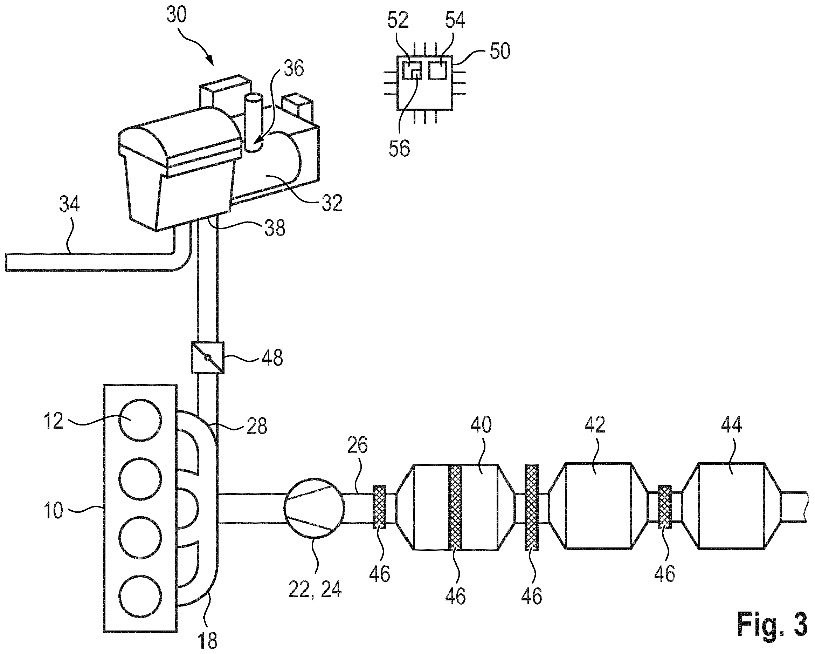

In Figur 3 ist ein weiteres Ausführungsbeispiel eines Verbrennungsmotors 10 mit einem erfindungsgemäßen Abgasnachbehandlungssystem in einer schematischen Darstellung gezeigt. Der Verbrennungsmotor 10 ist vorzugsweise als direkteinspritzender Dieselmotor ausgeführt und weist mehrere Brennräume 12 auf. An den Brennräumen 12 ist jeweils ein Kraftstoffinjektor 14 zur Einspritzung eines Kraftstoffes in den jeweiligen Brennraum 12 angeordnet. Der Verbrennungsmotor 10 ist mit seinem Einlass 16 mit einem nicht dargestellten Luftversorgungssystem und mit seinem Auslass 18 mit einer Abgasanlage 20 verbunden. An den Brennräumen 12 sind Einlassventile und Auslassventile angeordnet, mit welchen eine fluidische Verbindung vom Luftversorgungssystem zu den Brennräumen 12 oder von den Brennräumen 12 zur Abgasanlage 20 geöffnet oder verschlossen werden kann.

Die Abgasanlage 20 umfasst einen Abgaskanal 26, in welchem in Strömungsrichtung eines Abgasstromes des Verbrennungsmotors 10 durch die Abgasanlage 20 eine Turbine 24 eines Abgasturboladers 22, stromabwärts der Turbine 24 des Abgasturboladers 22 ein erste Abgasnachbehandlungskomponente 40, insbesondere ein Oxidationskatalysator 40, stromabwärts der ersten Abgasnachbehandlungskomponente 40 eine zweite Abgasnachbehandlungskomponente 42, insbesondere eine Partikelfilter 42 mit einer katalytischen Beschichtung zur selektiven katalytischen Reduktion von Stickoxiden, und stromabwärts der zweiten Abgasnachbehandlungskomponente 42 eine dritte Abgasnachbehandlungskomponente 44, insbesondere ein SCR-Katalysator 44, angeordnet ist.

Das Abgasnachbehandlungssystem umfasst ferner eine Standheizung 30. Die Standheizung 30 umfasst eine Brennkammer 32, an welcher eine Zündeinrichtung 36 zur Entzündung eines Kraftstoff-Luft-Gemischs in der Brennkammer 32 angeordnet ist. Die Standheizung 30 umfasst ferner eine Luftversorgung 34, mit welcher der Brennkammer 32 Frischluft zugeführt werden kann. Die Standheizung 30 umfasst ferner einen Auslass 38, über welchen das in der Brennkammer 32 verbrannte Kraftstoff-Luft-Gemisch dem Abgaskanal 26 zugeführt werden kann. Dazu ist eine Verbindungsleitung 58 vorgesehen, welche die Brennkammer 32 der Standheizung 30 mit dem Abgaskanal 26 verbindet und unmittelbar in einen Abgaskrümmer 60 am Auslass 18 des Verbrennungsmotors 10 einmündet. In der Verbindungsleitung 58 ist ein Steuerelement 48, insbesondere ein Ventil oder eine Klappe, angeordnet, über welches eine Zufuhr des in der Brennkammer 32 verbrannten Kraftstoff-Luft-Gemischs in den Abgaskanal 26 gesteuert, und im Betrieb des Verbrennungsmotors 10 ein Austreten des Abgases in Richtung Standheizung verhindert werden kann.

Die Abgasanlage 20 umfasst ferner mindestens ein elektrisches Heizelement 46, mit welchem ein Abgasstrom des Verbrennungsmotors 10, ein Abgasstrom der Standheizung 30 und/oder eine Abgasnachbehandlungskomponente 40, 42, 44 elektrisch beheizt werden kann. In Figur 3 sind mehrere potenziell mögliche Positionen für ein solches elektrisches Heizelement 46 dargestellt. In einer ersten Ausführung ist das elektrische Heizelement 46 stromabwärts der Einleitstelle 28 für das Abgas der Standheizung 30 und stromaufwärts der ersten Abgasnachbehandlungskomponente 40, vorzugsweise stromaufwärts des Oxidationskatalysators 40 angeordnet. Alternativ oder zusätzlich kann das elektrische Heizelement 46 in die erste Abgasnachbehandlungskomponente 40, insbesondere in den Oxidationskatalysator 40, integriert sein. Alternativ oder zusätzlich kann des elektrische Heizelement 46 stromabwärts der ersten Abgasnachbehandlungskomponente 40 und stromaufwärts der zweiten Abgasnachbehandlungskomponente 42, insbesondere stromabwärts des Oxidationskatalysators 40 und stromaufwärts des Partikelfilters 42 mit der Beschichtung zu selektiven katalytischen Reduktion von Stickoxiden, angeordnet sein. Ferner kann das elektrische Heizelement 46 in den Partikelfilter 42 integriert sein und insbesondere ein elektrisches Erhitzen der Filterstruktur des Partikelfilters 42 ermöglichen. Alternativ oder zusätzlich kann das elektrische Heizelement 46 stromabwärts der zweiten Abgasnachbehandlungskomponente 42 und stromaufwärts der dritten Abgasnachbehandlungskomponente 44 angeordnet sein.

Alternativ kann der Verbrennungsmotor 10, insbesondere bei dem in Figur 3 dargestellten Ausführungsbeispiel, auch als Saugmotor ausgeführt sein. In diesem Fall entfällt der Abgasturbolader 22 und die Einleitstelle 28 ist stromabwärts des Auslasses 18 des Verbrennungsmotors 10 und stromaufwärts der ersten Abgasnachbehandlungskomponente 40 beziehungsweise einem der ersten Abgasnachbehandlungskomponente 40 vorgeschalteten, elektrischen Heizelement 46 angeordnet.

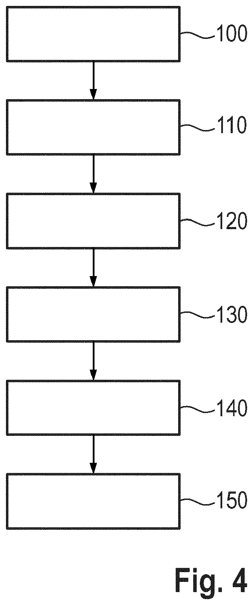

In Figur 4 ist ein Ablaufdiagramm zur Durchführung eines erfindungsgemäßen Verfahrens zur Abgasnachbehandlung eines Verbrennungsmotors 10 dargestellt, wobei der Verbrennungsmotors 10 mit einem in den vorhergehenden Abschnitten beschriebenen Abgasnachbehandlungssystem verbunden ist. In einem Verfahrensschritt <100> wird die Standheizung 30 aktiviert, wobei ein Kraftstoff-Luft-Gemisch in einer Brennkammer 32 der Standheizung 30 verbrannt wird und somit Wärme zum Aufheizen eines Fahrzeuginnenraums eines Kraftfahrzeuges und/oder eines Kühlsystems des Verbrennungsmotor 10 bereitstellt. In einem Verfahrensschritt <110> werden die Abgase des in der Brennkammer 32 verbrannten Kraftstoff-Luft-Gemischs in die Abgasanlage 20 des Verbrennungsmotors 10 eingeleitet, um dort den Abgaskanal 26 sowie die Abgasnachbehandlungskomponenten 40, 42 zu erhitzen. In einem Verfahrensschritt <120> wird das elektrische Heizelement 46 aktiviert, um in einem nachfolgenden Verfahrensschritt <130> zusätzlich zum Abgasstrom der Standheizung 30 Wärme in die Abgasanlage 20 einzubringen und die Abgasnachbehandlungskomponenten auf ihre Light-Off-Temperatur aufzuheizen. Dabei dient der Abgasstrom der Standheizung 30 als ein Gasstrom zur konvektiven Ableitung der Wärme von dem elektrischen Heizelement 46, um eine lokale Überhitzung zu vermeiden und die Wärme des elektrischen Heizelements 46 möglichst effizient in die Abgasnachbehandlungskomponente 40, 42 einzutragen. In einem Verfahrensschritt <140> wird der Verbrennungsmotor 10 gestartet. Dies erfolgt vorzugsweise erst dann, wenn die Abgasnachbehandlungskomponente bereits ihre Light-Off-Temperatur erreicht hat, sodass ab dem Start des Verbrennungsmotors 10 eine besonders effiziente Abgasnachbehandlung durch die Abgasnachbehandlungskomponenten 40, 42 möglich ist. Somit können die Abgasemissionen in der Kaltstartphase des Verbrennungsmotors 10 minimiert werden. In einem Verfahrensschritt <150> wird das elektrisch Heizelement 46 abgeschaltet, wenn die Abgasnachbehandlungskomponente 40, 42, vorzugsweise wenn sämtliche Abgasnachbehandlungskomponenten 40, 42, 44 ihre jeweilige Light-Off-Temperatur erreicht oder überschritten haben.

### Bezugszeichenliste

- 10: Verbrennungsmotor
- 12: Brennraum
- 14: Kraftstoffinjektor
- 16: Einlass
- 18: Auslass

- 20: Abgasanlage
- 22: Abgasturbolader
- 24: Turbine
- 26: Abgaskanal
- 28: Einleitstelle

- 30: Standheizung
- 32: Brennkammer
- 34: Luftversorgung
- 36: Zündeinrichtung
- 38: Auslass

- 40: Oxidationskatalysator
- 42: Partikelfilter
- 44: SCR-Katalysator
- 46: elektrisches Heizelement
- 48: Steuerelement

- 50: Steuergerät
- 52: Speichereinheit
- 54: Recheneinheit
- 56: Computerprogrammcode
- 58: Verbindungsleitung
- 60: Abgaskrümmer

## Patentansprüche

1. Abgasnachbehandlungssystem für einen Verbrennungsmotor (10), umfassend eine Abgasanlage (20) und eine Standheizung (30) mit einer Brennkammer (32), welche über eine Verbindungsleitung (58) mit einer Einleitstelle (28) an einem Abgaskanal (26) der Abgasanlage (20) verbunden ist, wobei stromabwärts der Einleitstelle (28) mindestens eine erste Abgasnachbehandlungskomponente (40) und eine zweite Abgasnachbehandlungskomponente (42) angeordnet sind, **dadurch gekennzeichnet, dass** zumindest eine der Abgasnachbehandlungskomponenten (40, 42) ein elektrisches Heizelement (46) zum Aufheizen der Abgasnachbehandlungskomponente (40, 42) umfasst oder zumindest einer der Abgasnachbehandlungskomponenten (40, 42) ein elektrisches Heizelement (46) vorgeschaltet ist, wobei das elektrische Heizelement (46) stromabwärts der Einleitstelle (28) angeordnet ist.

2. Abgasnachbehandlungssystem nach Anspruch 1, wobei in der Abgasanlage (20) eine Turbine (24) eines Abgasturboladers (22) angeordnet ist, wobei die Einleitstelle (28) stromabwärts der Turbine (24) des Abgasturboladers (22) und stromaufwärts der ersten Abgasnachbehandlungskomponente (40) angeordnet ist.

3. Abgasnachbehandlungssystem nach Anspruch 1, wobei in der Abgasanlage (20) eine Turbine (24) eines Abgasturboladers (22) angeordnet ist, wobei die Einleitstelle (28) stromabwärts eines Auslasses (18) des Verbrennungsmotors (10) und stromaufwärts der Turbine (24) des Abgasturboladers (22) angeordnet ist.

4. Abgasnachbehandlungssystem nach Anspruch 1 oder 3, wobei die Einleitstelle (28) in einem Abgaskrümmer (60) des Verbrennungsmotors (10) ausgebildet ist.

5. Abgasnachbehandlungssystem nach einem der Ansprüche 1 bis 4, wobei die erste Abgasnachbehandlungskomponente (40) ein Oxidationskatalysator (40), ein NOx-Speicherkatalysator oder ein NOx-Adsorber und die zweite Abgasnachbehandlungskomponente (42) ein Partikelfilter (42) ist.

6. Abgasnachbehandlungssystem nach einem der Ansprüche 1 bis 5, wobei in der Abgasanlage (20) stromabwärts der zweiten Abgasnachbehandlungskomponente (42) eine dritte Abgasnachbehandlungskomponente (44) angeordnet ist.

7. Abgasnachbehandlungssystem nach einem der Ansprüche 1 bis 6, wobei in der Verbindungsleitung (58) stromabwärts eines Auslasses (38) der Brennkammer (32) der Standheizung (30) und stromaufwärts der Einleitstelle (28) ein Steuerelement (48) zur Steuerung des in die Abgasanlage (20) eingebrachten Abgasstroms der Brennkammer (32) angeordnet ist.

8. Verfahren zur Abgasnachbehandlung eines Verbrennungsmotors (10) mit einem Abgasnachbehandlungssystem nach einem der Ansprüche 1 bis 7, umfassend folgende Schritte:
- Aktivieren der Standheizung (30), wobei ein Kraftstoff-Luft-Gemisch in einer Brennkammer (32) der Standheizung (30) verbrannt wird,
- Einleiten der Abgase des in der Brennkammer (32) verbrannten Kraftstoff-Luft-Gemischs in die Abgasanlage (20) des Verbrennungsmotors (10),
- Aktivieren des elektrischen Heizelements (46),
- Aufheizen zumindest einer Abgasnachbehandlungskomponente (40, 42) durch das elektrische Heizelement (46) und das Abgas der Standheizung (30),
- Start des Verbrennungsmotor (10),
- Reduzieren der Heizleistung des elektrischen Heizelements (46), wenn die Abgasnachbehandlungskomponente (40, 42) ihre Light-Off-Temperatur erreicht oder überschritten hat.

9. Verfahren zur Abgasnachbehandlung eines Verbrennungsmotors (10) nach Anspruch 8, wobei der Abgasstrom der Standheizung (30) einen Gasstrom in der Abgasanlage (20) ausbildet, um Wärme konvektiv von dem elektrischen Heizelement (46) abzutransportieren und somit eine thermische Schädigung des elektrischen Heizelements (46) zu verhindern.

10. Verfahren zur Abgasnachbehandlung eines Verbrennungsmotor (10) nach Anspruch 8 oder 9, wobei der Verbrennungsmotor (10) gestartet wird, wenn zumindest eine Abgasnachbehandlungskomponente (40, 42) ihre Light-Off-Temperatur erreicht hat.
